# EUROPEAN PATENT SPECIFICATION

(11) **EP 3 869 094 B1**
(45) Date of publication and mention of the grant of the patent: **12.07.2023**
(21) Application number: 21158124.4
(22) Date of filing: 19.02.2021
(51) Int. Cl.: F21V 21/03, F21V 17/16, F21S 8/04, F21V 17/14, F21Y 115/10, F21Y 103/33, F21Y 113/10, F21V 8/00

(54) **CEILING LIGHT APPARATUS**
DECKENLEUCHTENVORRICHTUNG
APPAREIL D'ÉCLAIRAGE DE PLAFOND

(30) Priority: 20.02.2020 CN 202020191741 U; 24.06.2020 CN 202021204278 U
(43) Date of publication of application: 25.08.2021
(73) Proprietor: LEEDARSON LIGHTING CO., LTD., Changtai, Zhangzhou Fujian 363999 (CN)
(72) Inventor: PENG, Wenjin, Fujian, 363999 (CN); ZHANG, Lei, Fujian, 363999 (CN); CHEN, Chunteng, Fujian, 363999 (CN); LIN, Ruixiang, Fujian, 363999 (CN); CHEN, Haiqiang, Fujian, 363999 (CN); LIANG, Wanzhen, Fujian, 363999 (CN); XU, Deshun, Fujian, 363999 (CN)
(74) Representative: Häckel, Stefan

(56) References cited:
- EP-A1- 3 511 607
- EP-A2- 2 495 492
- CN-A- 109 163 264
- JP-U- S57 127 406
- KR-B1- 101 852 712
- US-A1- 2018 356 057
- US-A1- 2019 064 429

## Description

### Field of the Invention

The present invention is related to a lighting apparatus according to the preamble of claim 1.

### Background

The time when the darkness is being lighten up by the light, human have noticed the need of lighting up this planet. Light has become one of the necessities we live with through the day and the night. During the darkness after sunset, there is no natural light, and human have been finding ways to light up the darkness with artificial light. From a torch, candles to the light we have nowadays, the use of light have been changed through decades and the development of lighting continues on.

Early human found the control of fire which is a turning point of the human history. Fire provides light to bright up the darkness that have allowed human activities to continue into the darker and colder hour of the hour after sunset. Fire gives human beings the first form of light and heat to cook food, make tools, have heat to live through cold winter and lighting to see in the dark.

Lighting is now not to be limited just for providing the light we need, but it is also for setting up the mood and atmosphere being created for an area. Proper lighting for an area needs a good combination of daylight conditions and artificial lights. There are many ways to improve lighting in a better cost and energy saving. LED lighting, a solid-state lamp that uses light-emitting diodes as the source of light, is a solution when it comes to energy-efficient lighting. LED lighting provides lower cost, energy saving and longer life span.

The major use of the light emitting diodes is for illumination. The light emitting diodes is recently used in light bulb, light strip or light tube for a longer lifetime and a lower energy consumption of the light. The light emitting diodes shows a new type of illumination which brings more convenience to our lives. Nowadays, light emitting diode light may be often seen in the market with various forms and affordable prices.

After the invention of LEDs, the neon indicator and incandescent lamps are gradually replaced. However, the cost of initial commercial LEDs was extremely high, making them rare to be applied for practical use. Also, LEDs only illuminated red light at early stage. The brightness of the light only could be used as indicator for it was too dark to illuminate an area. Unlike modern LEDs which are bound in transparent plastic cases, LEDs in early stage were packed in metal cases.

In 1878, Thomas Edison tried to make a usable light bulb after experimenting different materials. In November 1879, Edison filed a patent for an electric lamp with a carbon filament and keep testing to find the perfect filament for his light bulb. The highest melting point of any chemical element, tungsten, was known by Edison to be an excellent material for light bulb filaments, but the machinery needed to produce super-fine tungsten wire was not available in the late 19th century. Tungsten is still the primary material used in incandescent bulb filaments today.

Early candles were made in China in about 200 BC from whale fat and rice paper wick. They were made from other materials through time, like tallow, spermaceti, colza oil and beeswax until the discovery of paraffin wax which made production of candles cheap and affordable to everyone. Wick was also improved over time that made from paper, cotton, hemp and flax with different times and ways of burning. Although not a major light source now, candles are still here as decorative items and a light source in emergency situations. They are used for celebrations such as birthdays, religious rituals, for making atmosphere and as a decor.

Illumination has been improved throughout the times. Even now, the lighting device we used today are still being improved. From the illumination of the sun to the time when human can control fire for providing illumination which changed human history, we have been improving the lighting source for a better efficiency and sense. From the invention of candle, gas lamp, electric carbon arc lamp, kerosene lamp, light bulb, fluorescent lamp to LED lamp, the improvement of illumination shows the necessity of light in human lives.

There are various types of lighting apparatuses. When cost and light efficiency of LED have shown great effect compared with traditional lighting devices, people look for even better light output. It is important to recognize factors that can bring more satisfaction and light quality and flexibility.

Ceiling light device are widely used. It is usually difficult to install a ceiling light device, particularly in a bath room.

EP 3 511 607 A1 discloses a ceiling lamp structure, comprising a lamp top tray and a lamp body disposed on the lamp top tray.

EP 2 495 492 A1 discloses an illumination device including a light source part having a flat light emitting panel and a detachment part detachably attached to the light source part.

KR 101 852 712 B1 discloses a flat panel lighting fixture that is directly attached to ceiling surface.

US 2019/064429 A1 discloses a lighting arrangement including a light panel, a bracket, first and second retaining members and first and second connecting members.

It is beneficial and important to design a ceiling light that is easily to be installed to a ceiling.

### SUMMARY

Object of the present invention is preferably to provide a ceiling light apparatus that can be easily installed.

The above object is achieved by a ceiling light apparatus according to claim 1. Preferred embodiments are subject of the dependent claims.

The ceiling light apparatus includes a fixing bracket, a main housing and a light source.

The fixing bracket is firstly fixed on a ceiling.

The fixing bracket has a first end, a main part and a second end.

The main housing includes a back cover.

The back cover has a first connector and a second connector.

When the main housing is to be attached to the fixing bracket, the first end is firstly attached to the first connector and then the fist end is rotated with respect to the first connector to move the second end to approach to the second connector for elastically locking the second end to the second connector.

The light source is enclosed by the main housing for emitting a light via a light opening of the main housing.

The second connector has an elastic unit connected to a button.

When the button is pressed, the second end of the fixing bracket is released from the second connector.

The elastic unit includes a spring with a hook for locking the second end of the fixing bracket.

In some embodiments, a safety lock is manually operated for disabling the button to keep the second end of the fixing bracket held by the second connector.

In some embodiments, the button is placed on lateral side of the main housing.

The first end is a hook, the first connector is a shaft.

The hook is held by the shaft when the main housing is rotated with respect to the fixing bracket.

In some embodiments, the fixing bracket is an elongated bar.

In some embodiments, the main part has a wiring hole for an external wire to pass through.

In some embodiments, the back cover has a concave wiring container for storing the external wire.

The concave wiring container is located below the wiring hole.

In some embodiments, the back cover has a bracket groove for storing the fixing bracket.

In some embodiments, the back cover has a first groove for storing the first end of the fixing bracket and has a second groove for storing the second end of the fixing bracket.

In some embodiments, the light source is disposed at an inner wall of the main housing for emitting the light to a light guide to change the light leaving via the light opening.

In some embodiments, a decoration ring is detachably attached to a lateral wall of the main housing.

In some embodiments, the decoration ring is replaceable. When different decoration rings are attached to the main housing, the light source is adjusted for emitting lights with different parameters.

In some embodiments, a lateral side of the main housing emits a second light.

In some embodiments, the light source has multiple types of LED modules.

A manual switch is operated for adjusting a color temperature of the light.

In some embodiments, the manual switch is placed on the fixing bracket.

In some embodiments, a driver stops electricity when the second end leaves the second connector.

In some embodiments, the fixing bracket routes an external power source via the first end and the second end to the first connector and the second connector.

In some embodiments, a driver box is attached to the fixing bracket.

### BRIEF DESCRIPTION OF DRAWINGS

Fig. 1 illustrates a ceiling light apparatus embodiment.
Fig. 2 illustrates an exploded view of the embodiment in Fig. 1.
Fig. 3 illustrates a cross-sectional view of the example in Fig. 1.
Fig. 4 illustrates an installation step in an example.
Fig. 5 illustrates a first status when installing the ceiling light apparatus.
Fig. 6 illustrates a second status when installing the ceiling light apparatus.
Fig. 7 illustrates a third status when installing the ceiling light apparatus.
Fig. 8 illustrates a decoration ring to be attached to the main housing.
Fig. 9 illustrates the decoration ring attached to the main housing.
Fig. 10 illustrates a zoom-up view of the connection of the decoration ring.
Fig. 11 illustrates another view of the example in Fig. 10.
Fig. 12 illustrates a cross-sectional view of the example in Fig. 11.
Fig. 13 illustrates a back cover of the main housing.
Fig. 14 illustrates a cross-sectional view of the ceiling light apparatus.
Fig. 15 illustrates a second connector example.
Fig. 16 illustrates a fixing bracket example.
Fig. 17 illustrates a rotation shaft example.
Fig. 18 illustrates another embodiment of a ceiling light apparatus.

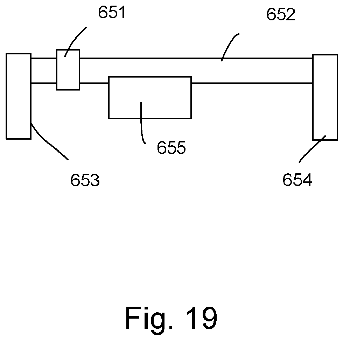

Fig. 19 shows an example of a fixing bracket.

### DETAILED DESCRIPTION

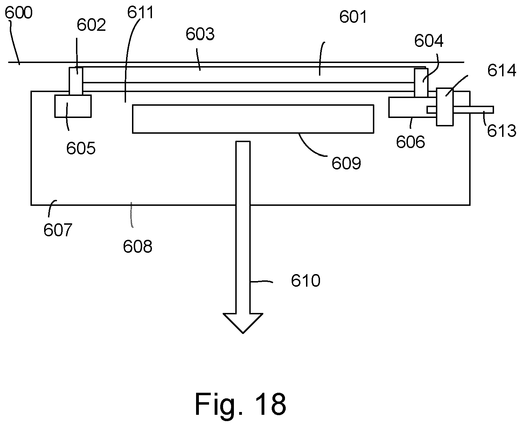

In Fig. 18, a ceiling light apparatus includes a fixing bracket 601, a main housing 607 and a light source 609.

The fixing bracket 601 is firstly fixed on a ceiling600.

The fixing bracket 601 has a first end 602, a main part 603 and a second end 604.

The main housing 607 includes a back cover 611.

The back cover 611 has a first connector 605 and a second connector 606.

When the main housing 607 is to be attached to the fixing bracket 601, the first end 602is firstly attached to the first connector 605 and then the fist end 602 is rotated with respect to the first connector 605 to move the second end 604 to approach to the second connector 606 for elastically locking the second end 604 to the second connector 606.

The light source 609 is enclosed by the main housing 607 for emitting a light 610 via a light opening 608 of the main housing 607.

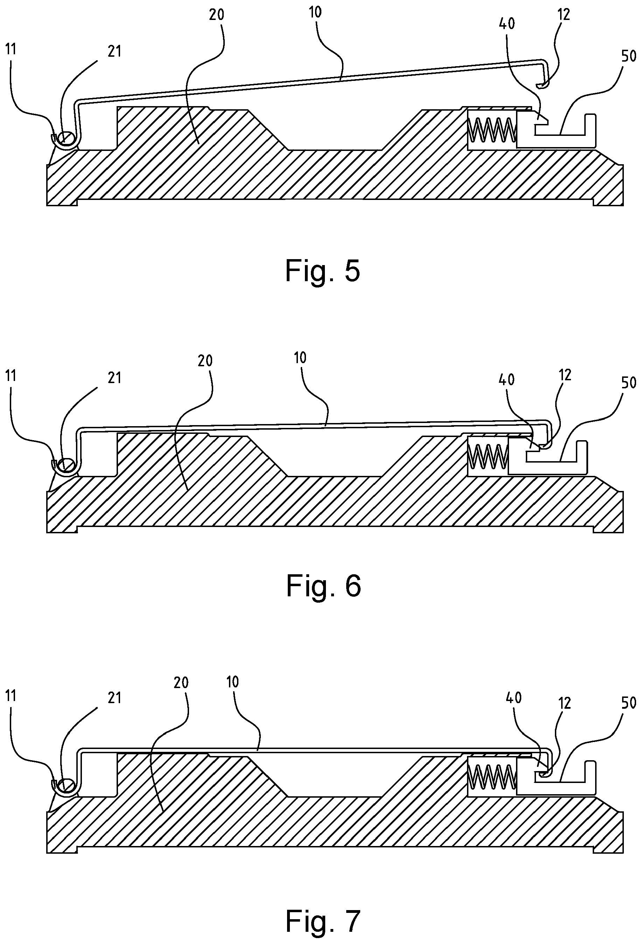

The second connector has an elastic unit connected to a button. For example, Fig. 5 shows a fixing bracket 10 having a second end 12 to be fixed to a second connector. The second connector has a hook 40 fixed to an elastic unit like a spring. The hook 40 is further connected to a button 50. When users press the button, the second end 12 is released from the second connector.

When the button is pressed, the second end of the fixing bracket is released from the second connector.

The elastic unit includes a spring with a hook for locking the second end of the fixing bracket, as shown in the example of Fig. 5.

In Fig. 18, a safety lock 613 is manually operated for disabling the button 614 to keep the second end 604 of the fixing bracket 601 held by the second connector 606.

In some embodiments, the button 614 is placed on lateral side of the main housing 607.

The first end is a hook.

The first connector is a shaft.

For example, Fig. 5 shows the first end 11 is a hook and the first connector 21 is a shaft. The hook is rotatable along the first connector 21.

The hook is held by the shaft when the main housing is rotated with respect to the fixing bracket.

In some embodiments, the fixing bracket is an elongated bar, as shown in Fig. 18.

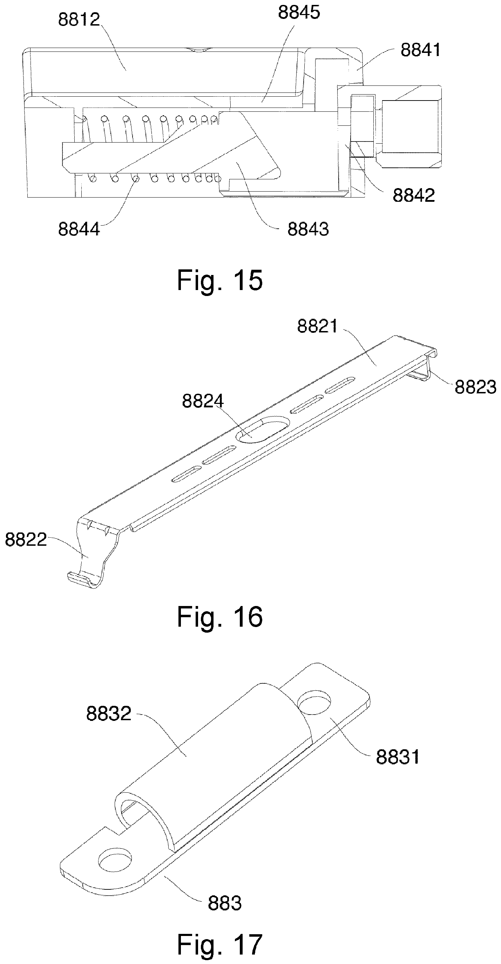

In some embodiments, the main part has a wiring hole for an external wire to pass through. For example, Fig. 16 shows a fixing bracket with a wiring hole 8824 in its main part 8821. Fig. 16 also shows the first end 8822 and the second end 8823 as hooks.

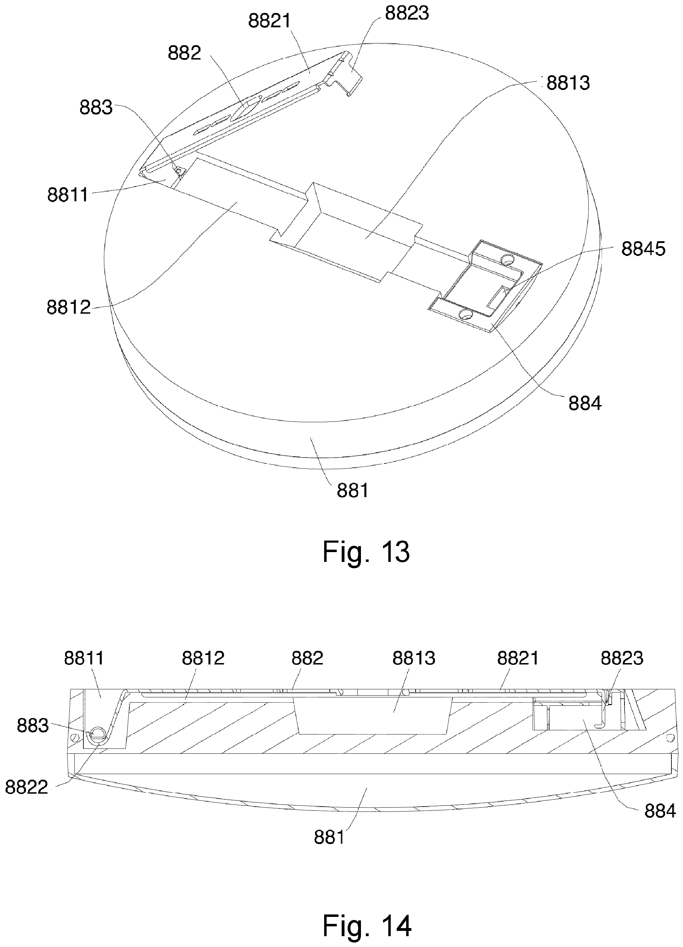

In some embodiments, the back cover has a concave wiring container for storing the external wire. For example, Fig. 14 shows a concave wiring container 8813.

The concave wiring container 8813 is located below the wiring hole.

In some embodiments, the back cover has a bracket groove for storing the fixing bracket. For example, in Fig. 13, the main housing has a bracket groove 8812 for storing the fixing bracket 882.

In Fig. 13, the back cover has a first groove 8811 for storing the first end of the fixing bracket 882 and has a second groove 8845 for storing the second end 8823 of the fixing bracket 882.

In some embodiments, the light source is disposed at an inner wall of the main housing for emitting the light to a light guide to change the light leaving via the light opening.

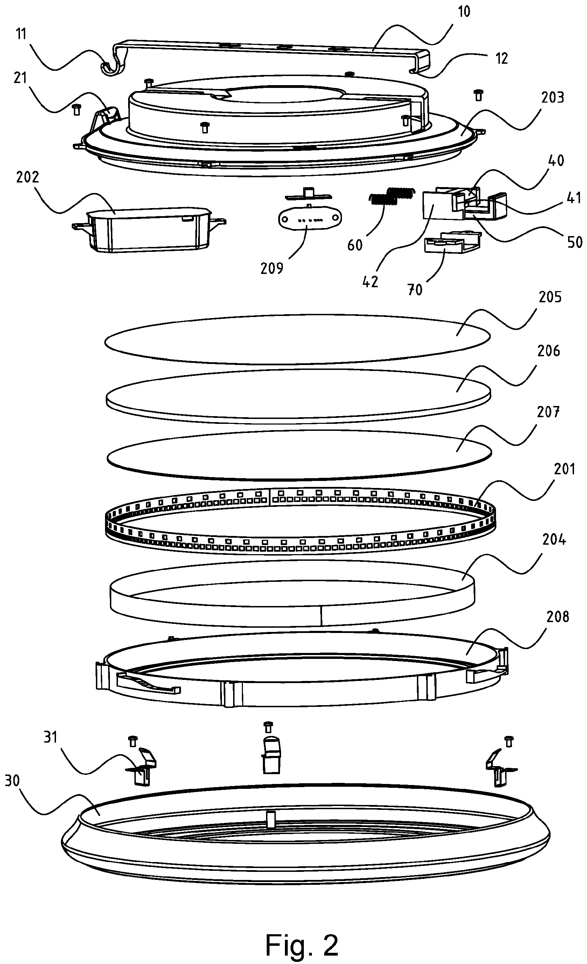

For example, Fig. 2 shows an example with a light guide 206 for directing light of the light source 201 to a light opening.

In Fig. 2, a decoration ring 30 is detachably attached to a lateral wall of the main housing.

In some embodiments, the decoration ring 30 is replaceable. When different decoration rings are attached to the main housing, the light source is adjusted for emitting lights with different parameters.

In some embodiments, a lateral side of the main housing emits a second light.

In some embodiments, the light source has multiple types of LED modules.

A manual switch is operated for adjusting a color temperature of the light.

In some embodiments, the manual switch 651 is placed on the fixing bracket 652.

In some embodiments, a driver stops electricity when the second end leaves the second connector. For example, a switch is triggered to stop electricity to flow into the ceiling light apparatus.

In some embodiments, the fixing bracket routes an external power source via the first end and the second end to the first connector and the second connector.

In some embodiments, a driver box 655 is attached to the fixing bracket 652.

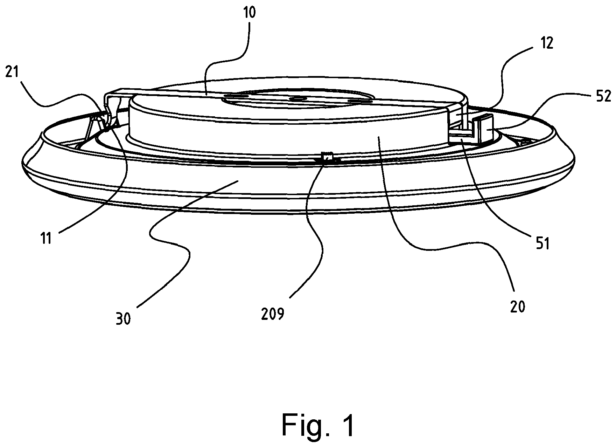

Fig. 1 shows a ceiling light apparatus embodiment.

In Fig. 1, the ceiling light apparatus has a fixing bracket 10. The fixing bracket 10 has a first end 11 and a second end 12 as hooks. A button 52 is operable for releasing the second end 12 from the second connector 51 to detach the main housing 20 from the fixing bracket 10. The first end 11 is connected to the first connector 21.

Fig. 2 shows an exploded view of the example in Fig. 1.

In addition to the components mentioned above, the main housing has a back cover 203. There is a driver 202 for converting an external power to a driving current to the light source 201.

The second connector 40 has a button 50 and an elastic unit 60. The button 50 may be pressed to release a hook from the second end 12. There is a support base for holding the second connector 40. The manual switch 209 is used for adjusting a color temperature. The manual switch 209 is connected to the driver 202 for the driver 202 to adjust currents supplied to different types of LED modules to mix a desired color temperature. There is a reflector layer, a light guide 206 and a diffusion layer for changing light paths.

There is a lateral ring 208 with elastic clips 31 for mounting a decoration ring 30.

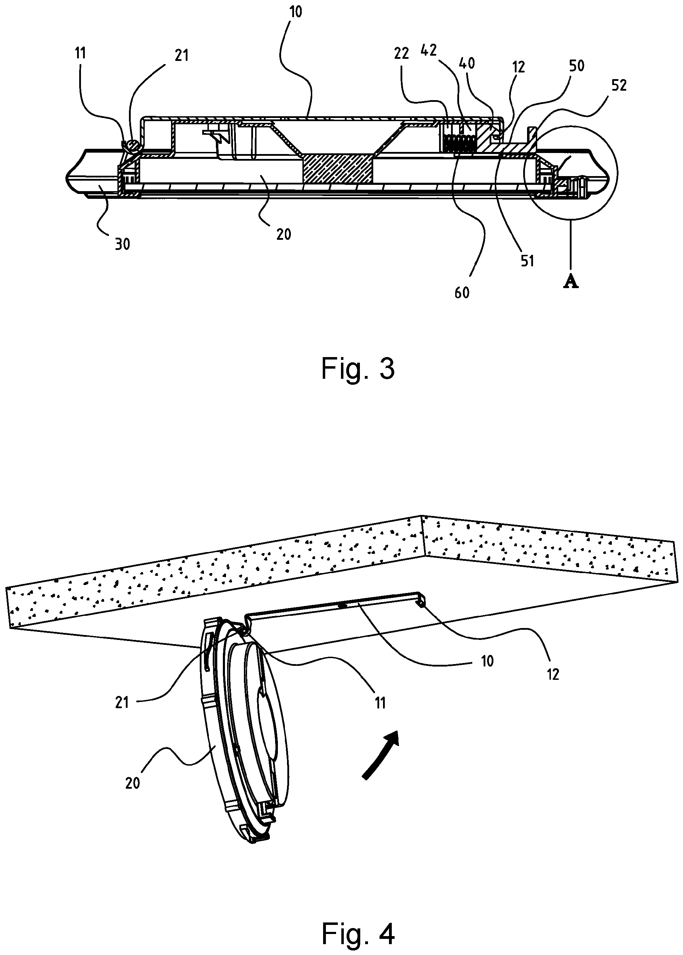

Fig. 3 shows a cross-sectional view of the example in Fig. 2.

In addition to the components mentioned above, there is a container space 22 for storing the second end.

There is a manual switch 209 for adjusting a color temperature of a light source stored in the main housing 20.

There is a decoration ring 30 detachable attached to the main housing.

In Fig. 4, the main housing 20 is rotated with respect to the fixing bracket 10. Other components with the same reference numerals refer to the same components and are not repeated again in following disclosure.

Fig. 5, Fig. 6 and Fig. 7 show steps on locking the second end of the fixing bracket to the second connector of the main housing.

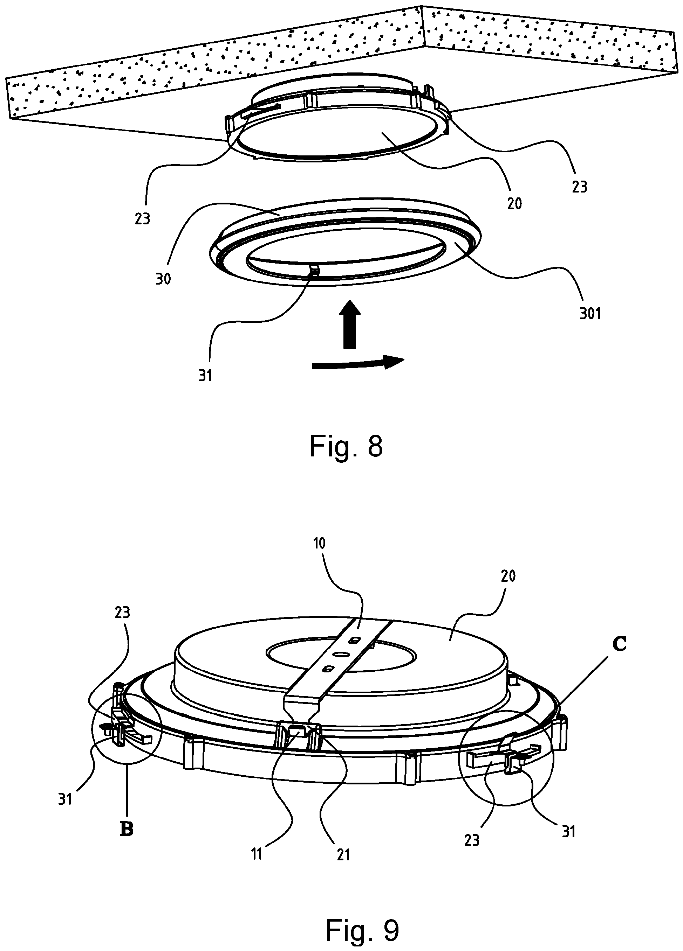

Fig. 8 shows fixing arm 23 being disposed on a lateral side of a main housing 20 to install a decoration ring 30. The bottom part 301 of the decoration ring adjusts light output effect.

There is an elastic clip 31 corresponding to the fixing arm 23 to fix the decoration ring 30 to the main housing 20 by rotation.

Fig. 9 shows another view for integrating the fixing bracket 10, the main housing 20 and the decoration ring.

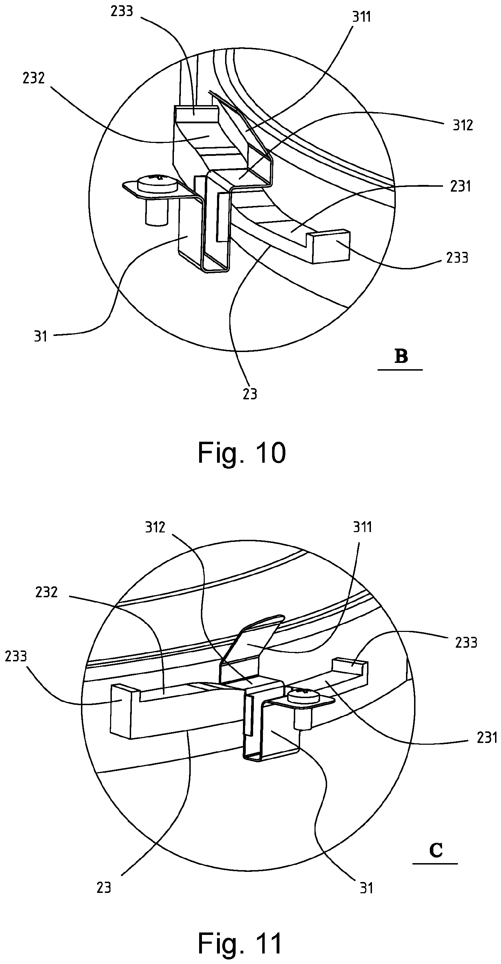

Fig. 10 shows a zoom-up view on how the fixing arm 23 to be fixed to the elastic clip 31. There is a tilt guiding surface 311, a block 233 disposed at an end 232 of the fixing arm 23. There is a stop block 233 at another end 231 of the fixing arm 23 to prevent releasing of the elastic clip 31.

The fixing arm 23 has a fixing surface for contacting and holding the elastic clip 31.

Fig. 11 shows another view of the example in Fig. 10.

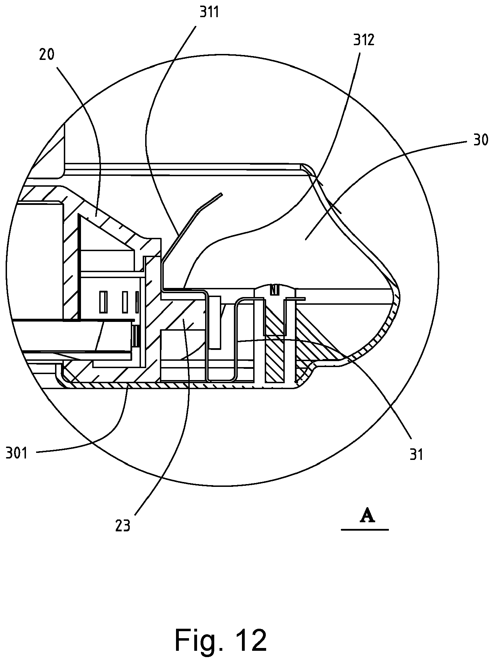

Fig. 12 shows another view of the example in Fig. 10 and Fig. 11.

Fig. 13 shows a fixing bracket 882 to be installed to a main housing 881.

There is a second connector 884 with a passing hole 8845 for inserting the second end 8823 of the fixing bracket 882. The main part 8821 is stored in the groove 8812. There is a deeper groove 8811 with a shaft 883 as the first connector. The deeper groove 8811 is used for storing the first end of the fixing bracket 882.

Fig. 14 shows a cross-sectional view of the example in Fig. 13. There is a concave wiring groove 8813 for storing wire parts of an external wire.

Fig. 15 shows a second connector that has a passing hole 8845 below the container groove 8812. There is a sliding frame 8842 attached to a main housing 8841. There is a hook 8843 to be attached to the second end of a fixing bracket using an elastic unit 8844 like a spring.

Fig. 16 shows a fixing bracket.

Fig. 17 shows a shaft 883 with a support plate 8831 and a support tube 8832 for the first end of the fixing bracket to rotate with respect to the shaft 883.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art.

## Claims

1. A ceiling light apparatus, comprising:
a fixing bracket (10, 601, 652, 882) to be fixed on a ceiling (600), wherein the fixing bracket (10, 601, 652, 882) has a first end (11, 602, 8822), a main part (603, 8821) and a second end (12, 604, 8823);
a main housing (20, 607, 881, 8841) comprising a back cover (203, 611), wherein the back cover (203, 611) has a first connector (21, 605) and a second connector (40, 606, 884), when the main housing (20, 607, 881, 8841) is to be attached to the fixing bracket (10, 601, 652, 882), the first end (11, 602, 8822) is firstly attached to the first connector (21, 605) and then the first end is rotated with respect to the first connector (21, 605) to move the second end (12, 604, 8823) to approach to the second connector (40, 606, 884) for elastically locking the second end (12, 604, 8823) to the second connector (40, 606, 884); and
a light source (201, 609) enclosed by the main housing (20, 607, 881, 8841) for emitting a light (610) via a light opening (608) of the main housing (20, 607, 881, 8841),
wherein the first end (11, 602, 8822) is a hook (40, 8843), the first connector (21, 605) is a shaft (883), the hook (40, 8843) is held by the shaft (883) when the main housing (20, 607, 881, 8841) is rotated with respect to the fixing bracket (10, 601, 652, 882),
**characterized in**
**that** the second connector (40, 606, 884) has an elastic unit (60, 8844) connected to a button (50, 52, 614) and comprising a spring with a hook (40, 8843) for locking the second end (12, 604, 8823) of the fixing bracket (10, 601, 652, 882), when the button (50, 52, 614) is pressed, the second end (12, 604, 8823) of the fixing bracket (10, 601, 652, 882) is released from the second connector (40, 606, 884).

2. The ceiling light apparatus of claim 1, wherein a safety lock (613) is manually operated for disabling the button (50, 52, 614) to keep the second end (12, 604, 8823) of the fixing bracket (10, 601, 652, 882) held by the second connector (40, 606, 884).

3. The ceiling light apparatus of claim 1 or 2, wherein the button (50, 52, 614) is placed on lateral side of the main housing (20, 607, 881, 8841).

4. The ceiling light apparatus of any one of the preceding claims, wherein the fixing bracket (10, 601, 652, 882) is an elongated bar.

5. The ceiling light apparatus of any one of the preceding claims, wherein the main part (603, 8821) has a wiring hole (8824) for an external wire to pass through, preferably, the back cover (203, 611) has a concave wiring container (8813) for storing the external wire, the concave wiring container (8813) is located below the wiring hole (8824).

6. The ceiling light apparatus of any one of the preceding claims, wherein the back cover (203, 611) has a bracket groove (8812) for storing the fixing bracket (10, 601, 652, 882), preferably, the back cover (203, 611) has a first groove (8811) for storing the first end (11, 602, 8822) of the fixing bracket (10, 601, 652, 882) and has a second groove (8845) for storing the second end (12, 604, 8823) of the fixing bracket (10, 601, 652, 882).

7. The ceiling light apparatus of any one of the preceding claims, wherein the light source (201, 609) is disposed at an inner wall of the main housing (20, 607, 881, 8841) for emitting the light (610) to a light guide (206) to change the light leaving via the light opening (608).

8. The ceiling light apparatus of any one of the preceding claims, wherein a decoration ring (30) is detachably attached to a lateral wall of the main housing (20, 607, 881, 8841), preferably, the decoration ring (30) is replaceable, when different decoration rings (30) are attached to the main housing (20, 607, 881, 8841), the light source (201, 609) is adjusted for emitting lights with different parameters.

9. The ceiling light apparatus of any one of the preceding claims, wherein a lateral side of the main housing (20, 607, 881, 8841) emits a second light.

10. The ceiling light apparatus of any one of the preceding claims, wherein the light source (201, 609) has multiple types of LED modules, a manual switch (209, 651) is operated for adjusting a color temperature of the light, preferably, the manual switch (209, 651) is placed on the fixing bracket (10, 601, 652, 882).

11. The ceiling light apparatus of any one of the preceding claims, wherein a driver stops electricity when the second end (12, 604, 8823) leaves the second connector (40, 606, 884).

12. The ceiling light apparatus of any one of the preceding claims, wherein the fixing bracket (10, 601, 652, 882) routes an external power source via the first end (11, 602, 8822) and the second end (12, 604, 8823) to the first connector (21, 605) and the second connector (40, 606, 884).

13. The ceiling light apparatus of any one of the preceding claims, wherein a driver box (655) is attached to the fixing bracket (10, 601, 652, 882).

## Patentansprüche

1. Deckenleuchte, umfassend:
eine Halterung (10, 601, 652, 882), die an einer Decke (600) zu befestigen ist, wobei die Halterung (10, 601, 652, 882) ein erstes Ende (11, 602, 8822), einen Hauptteil (603, 8821) und ein zweites Ende (12, 604, 8823) aufweist
ein Hauptgehäuse (20, 607, 881, 8841), das eine hintere Abdeckung (203, 611) aufweist, wobei die hintere Abdeckung (203, 611) ein erstes Verbindungselement (21, 605) und ein zweites Verbindungselement (40, 606, 884) aufweist, wobei, wenn das Hauptgehäuse (20, 607, 881, 8841) an der Halterung (10, 601, 652, 882) zu befestigen ist, das erste Ende (11, 602, 8822) zunächst an dem ersten Verbindungselement (21, 605) angebracht wird und dann das erste Ende (11, 602, 8822) in Bezug auf das erste Verbindungselement (21, 605) gedreht wird, um das zweite Ende (12, 604, 8823) zu bewegen, um sich dem zweiten Verbindungselement (40, 606, 884) anzunähern, um das zweite Ende (12, 604, 8823) mit dem zweiten Verbindungselement (40, 606, 884) elastisch zu verriegeln; und
eine Lichtquelle (201, 609), die von dem Hauptgehäuse (20, 607, 881, 8841) eingeschlossen ist, um ein Licht (610) über eine Lichtöffnung (608) des Hauptgehäuses (20, 607, 881, 8841) zu emittieren,
wobei das erste Ende (11, 602, 8822) ein Haken (40, 8843) ist, das erste Verbindungselement (21, 605) ein Schaft (883) ist, der Haken (40, 8843) von dem Schaft (883) gehalten wird, wenn das Hauptgehäuse (20, 607, 881, 8841) in Bezug auf die Halterung (10, 601, 652, 882) gedreht wird,
**dadurch gekennzeichnet,**
**dass** das zweite Verbindungselement (40, 606, 884) eine elastische Einheit (60, 8844), die mit einem Knopf (50, 52, 614) verbunden ist, und eine Feder mit einem Haken (40, 8843) zum Verriegeln des zweiten Endes (12, 604, 8823) der Halterung (10, 601, 652, 882) aufweist, wenn der Knopf (50, 52, 614) gedrückt wird, wird das zweite Ende (12, 604, 8823) der Halterung (10, 601, 652, 882) vom zweiten Verbindungselement (40, 606, 884) gelöst.

2. Deckenleuchte nach Anspruch 1, wobei eine Sicherheitsverriegelung (613) manuell betätigt wird, um den Knopf (50, 52, 614) zu deaktivieren, damit das zweite Ende (12, 604, 8823) der Halterung (10, 601, 652, 882) durch das zweite Verbindungselement (40, 606, 884) gehalten wird.

3. Deckenleuchte nach Anspruch 1 oder 2, wobei der Knopf (50, 52, 614) an der Seite des Hauptgehäuses (20, 607, 881, 8841) angeordnet ist.

4. Deckenleuchte nach einem der vorhergehenden Ansprüche, wobei die Halterung (10, 601, 652, 882) ein länglicher Stab ist.

5. Deckenleuchte nach einem der vorhergehenden Ansprüche, wobei der Hauptteil (603, 8821) ein Verdrahtungsloch (8824) zum Durchführen eines externen Drahtes aufweist, vorzugsweise weist die hintere Abdeckung (203, 611) einen konkaven Verdrahtungsbehälter (8813) zum Aufbewahren des externen Drahtes auf, wobei der konkave Verdrahtungsbehälter (8813) unterhalb des Verdrahtungslochs (8824) angeordnet ist.

6. Deckenleuchte nach einem der vorhergehenden Ansprüche, wobei die hintere Abdeckung (203, 611) eine Halterungsnut (8812) zur Aufnahme der Halterung (10, 601, 652, 882) aufweist, vorzugsweise weist die hintere Abdeckung (203, 611) eine erste Nut (8811) zur Aufnahme des ersten Endes (11, 602, 8822) der Halterung (10, 601, 652, 882) und eine zweite Nut (8845) zur Aufnahme des zweiten Endes (12, 604, 8823) der Halterung (10, 601, 652, 882) auf.

7. Deckenleuchte nach einem der vorhergehenden Ansprüche, wobei die Lichtquelle (201, 609) an einer Innenwand des Hauptgehäuses (20, 607, 881, 8841) angeordnet ist, um das Licht (610) zu einem Lichtleiter (206) zu emittieren, um das über die Lichtöffnung (608) austretende Licht zu verändern.

8. Deckenleuchte nach einem der vorhergehenden Ansprüche, wobei ein Dekorationsring (30) abnehmbar an einer Seitenwand des Hauptgehäuses (20, 607, 881, 8841) angebracht ist, vorzugsweise ist der Dekorationsring (30) austauschbar, wenn verschiedene Dekorationsringe (30) an dem Hauptgehäuse (20, 607, 881, 8841) angebracht sind, wird die Lichtquelle (201, 609) so eingestellt, dass sie Licht mit verschiedenen Parametern abgibt.

9. Deckenleuchte nach einem der vorhergehenden Ansprüche, wobei eine laterale Seite des Hauptgehäuses (20, 607, 881, 8841) ein zweites Licht abstrahlt.

10. Deckenleuchte nach einem der vorhergehenden Ansprüche, wobei die Lichtquelle (201, 609) mehrere Typen von LED-Modulen aufweist, ein manueller Schalter (209, 651) zum Einstellen einer Farbtemperatur des Lichts betätigt wird, vorzugsweise ist der manuelle Schalter (209, 651) auf der Halterung (10, 601, 652, 882) angeordnet.

11. Deckenleuchte nach einem der vorhergehenden Ansprüche, wobei ein Treiber die Elektrizität unterbricht, wenn das zweite Ende (12, 604, 8823) das zweite Verbindungselement (40, 606, 884) verlässt.

12. Deckenleuchte nach einem der vorhergehenden Ansprüche, wobei die Halterung (10, 601, 652, 882) eine externe Stromquelle über das erste Ende (11, 602, 8822) und das zweite Ende (12, 604, 8823) zu dem ersten Verbindungselement (21, 605) und dem zweiten Verbindungselement (40, 606, 884) leitet.

13. Deckenleuchte nach einem der vorhergehenden Ansprüche, wobei eine Treiberbox (655) an der Halterung (10, 601, 652, 882) angebracht ist.

## Revendications

1. Appareil d'éclairage de plafond comprenant
un support de fixation (10, 601, 652, 882) à fixer sur un plafond (600), dans lequel le support de fixation (10, 601, 652, 882) a une première extrémité (11, 602, 8822), une partie principale (603, 8821) et une deuxième extrémité (12, 604, 8823) ;
un boîtier principal (20, 607, 881, 8841) comprenant un couvercle arrière (203, 611), dans lequel le couvercle arrière (203, 611) a un premier connecteur (21, 605) et un deuxième connecteur (40, 606, 884), lorsque le boîtier principal (20, 607, 881, 8841) doit être fixé au support de fixation (10, 601, 652, 882), la première extrémité (11, 602, 8822) est d'abord fixée au premier connecteur (21, 605), puis la première extrémité (11, 602, 8822) est tournée par rapport au premier connecteur (21, 605) pour déplacer la deuxième extrémité (12, 604, 8823) afin qu'elle s'approche du deuxième connecteur (40, 606, 884) pour verrouiller élastiquement la deuxième extrémité (12, 604, 8823) au deuxième connecteur (40, 606, 884) ; et
une source de lumière (201, 609) enfermée dans le boîtier principal (20, 607, 881, 8841) pour émettre une lumière (610) via une ouverture de lumière (608) du boîtier principal (20, 607, 881, 8841),
dans lequel la première extrémité (11, 602, 8822) est un crochet (40, 8843), le premier connecteur (21, 605) est un arbre (883), le crochet (40, 8843) est maintenu par l'arbre (883) lorsque le boîtier principal (20, 607, 881, 8841) est tourné par rapport au support de fixation (10, 601, 652, 882),
**caractérisé par**
que le deuxième connecteur (40, 606, 884) comporte une unité élastique (60, 8844) reliée à un bouton (50, 52, 614) et comprenant un ressort avec un crochet (40, 8843) pour bloquer la deuxième extrémité (12, 604, 8823) du support de fixation (10, 601, 652, 882), lorsque le bouton (50, 52, 614) est enfoncé, la deuxième extrémité (12, 604, 8823) du support de fixation (10, 601, 652, 882) est libérée du deuxième connecteur (40, 606, 884).

2. Appareil d'éclairage de plafond de la revendication 1, dans lequel un verrou de sécurité (613) est actionné manuellement pour désactiver le bouton (50, 52, 614) afin de maintenir la deuxième extrémité (12, 604, 8823) du support de fixation (10, 601, 652, 882) retenue par le deuxième connecteur (40, 606, 884).

3. Appareil d'éclairage de plafond de la revendication 1 ou 2, dans lequel le bouton (50, 52, 614) est placé sur le côté latéral du boîtier principal (20, 607, 881, 8841).

4. Appareil d'éclairage de plafond de l'une des revendications précédentes, dans lequel le support de fixation (10, 601, 652, 882) est une barre allongée.

5. Appareil d'éclairage de plafond de l'une quelconque des revendications précédentes, dans lequel la partie principale (603, 8821) comporte un trou de câblage (8824) pour le passage d'un fil externe, de préférence, le couvercle arrière (203, 611) comporte un conteneur de câblage concave (8813) pour le stockage du fil externe, le conteneur de câblage concave (8813) est situé sous le trou de câblage (8824).

6. Appareil d'éclairage de plafond de l'une des revendications précédentes, dans lequel le couvercle arrière (203, 611) a une rainure de support (8812) pour stocker le support de fixation (10, 601, 652, 882), de préférence, le couvercle arrière (203, 611) possède une première rainure (8811) pour ranger la première extrémité (11, 602, 8822) du support de fixation (10, 601, 652, 882) et possède une deuxième rainure (8845) pour ranger la deuxième extrémité (12, 604, 8823) du support de fixation (10, 601, 652, 882).

7. Appareil d'éclairage de plafond de l'une des revendications précédentes, dans lequel la source de lumière (201, 609) est disposée sur une paroi intérieure du boîtier principal (20, 607, 881, 8841) pour émettre la lumière (610) vers un guide de lumière (206) afin de modifier la lumière sortant par l'ouverture de lumière (608).

8. L'appareil d'éclairage de plafond de l'une des revendications précédentes, dans lequel un anneau de décoration (30) est fixé de manière amovible à une paroi latérale du boîtier principal (20, 607, 881, 8841), de préférence, l'anneau de décoration (30) est remplaçable, lorsque différents anneaux de décoration (30) sont fixés au boîtier principal (20, 607, 881, 8841), la source de lumière (201, 609) est ajustée pour émettre des lumières avec des paramètres différents.

9. Appareil d'éclairage de plafond de l'une des revendications précédentes, dans lequel un côté latéral du boîtier principal (20, 607, 881, 8841) émet une seconde lumière.

10. Appareil d'éclairage de plafond de l'une quelconque des revendications précédentes, dans lequel la source de lumière (201, 609) comporte plusieurs types de modules LED, un interrupteur manuel (209, 651) est actionné pour régler la température de couleur de la lumière, de préférence, l'interrupteur manuel (209, 651) est placé sur le support de fixation (10, 601, 652, 882).

11. Appareil d'éclairage de plafond de l'une quelconque des revendications précédentes, dans lequel un conducteur arrête l'électricité lorsque la deuxième extrémité (12, 604, 8823) quitte le deuxième connecteur (40, 606, 884).

12. Appareil d'éclairage de plafond de l'une quelconque des revendications précédentes, dans lequel le support de fixation (10, 601, 652, 882) achemine une source d'énergie externe via la première extrémité (11, 602, 8822) et la deuxième extrémité (12, 604, 8823) vers le premier connecteur (21, 605) et le deuxième connecteur (40, 606, 884).

13. Appareil d'éclairage de plafond de l'une quelconque des revendications précédentes, dans lequel une boîte de commande (655) est fixée au support de fixation (10, 601, 652, 882).
